Europäisches Patentamt

**European Patent Office**

**Office européen des brevets**

(19)

(11) Publication number: **0 137 639**

**A1**

(12)

# EUROPEAN PATENT APPLICATION

(21) Application number: **84305507.0**

(22) Date of filing: **13.08.84**

(51) Int. Cl.⁴: **F 16 K 1/226**
**F 16 K 25/00**

(30) Priority: **15.08.83 US 523662**

(43) Date of publication of application:
**17.04.85 Bulletin 85/16**

(84) Designated Contracting States:
**DE FR GB IT NL**

(71) Applicant: **KEYSTONE INTERNATIONAL INC.**
**9600 West Gulf Bank Drive**
**Houston Texas 77040(US)**

(72) Inventor: **Scobie, William Bryce**
**17111 Jane Lynne Lane**
**Houston Texas 77070(US)**

(72) Inventor: **Holtgraver, Edward G.**
**16203 Chipstead Drive**
**Spring Texas 77373(US)**

(74) Representative: **Allam, Peter Clerk et al,**
**LLOYD WISE, TREGEAR & CO. Norman House 105-109**
**Strand**
**London WC2R 0AE(GB)**

(54) **Valve assembly having reversible seat.**

(57) A valve assembly of the butterfly type wherein the valve seat assembly is comprised of an annular, rigid seat support ring which is generally U-shaped in transverse cross section providing a radially inwardly opening channel for receipt of an elastomeric seat member, the elastomeric seat member substantially filling the channel-shaped support ring and having a portion extending radially inward to provide an annularly extending seating surface for engagement with the peripheral sealing edge of the disk, the elastomeric portion of the seat assembly having a configuration which permits the pressure rating sealing capabilities of the valve to be changed using the same seat assembly or, alternatively, provides for a seat assembly of extended life.

./...

Croydon Printing Company Ltd.

FIG.1

TITLE:    VALVE ASSEMBLY HAVING REVERSIBLE SEAT

## 1.  Field of the Invention

The present invention relates to fluid control valves and more particularly to an improved butterfly valve having a reversible seat assembly.

## 2.  Prior Art

Valves employing pivotal closure assemblies, such as butterfly valves, have found wide use in the industry for fluid handling control. In particular, butterfly or disk valves have found wide usage for the handling of water and in waste treatment facilities such as, for example, in large municipal operations. Butterfly valves used in such environments generally employ polymeric valve seat members, more specially, elastomeric-type valve seat members to effect sealing between the disks and the seat assembly. Because such valves are opened and closed frequently, the polymeric or elastomeric portion of the seat assembly is prone to rapid wear. Additionally, it is not uncommon for valves in such environments to be exposed to relatively widely varying pressure conditions which, in many cases, will necessitate removing a given valve and replacing it with one of a higher pressure rating or providing a new seat assembly for the valve.

It is known to provide valve seats for butterfly valves which are reversible in the sense that once the seating surface which sealingly engages the valve disk has worn to the point where the valve is no longer sealing flow effectively, the valve seat can be reversed and a new seating surface on the seat assembly utilized. However, in such valve assemblies having such reversible seat assemblies, the polymeric seat member is normally axially compressed against a suitable abutment surface in the valve body. Accordingly, it is difficult to control the dimensional integrity of the polymeric seat member with the result that it will either wear excessively or will fail to seal sufficiently.

## Summary of the Invention

It is therefore an object of the present invention to provide an improved seat assembly for valves employing rotary or pivotal valve closure elements.

Another object of the present invention is to provide an improved valve assembly and a seat therefor in which the seat is reversible and in which the axial, dimensional integrity of the polymeric portion of the seat is retained when the valve seat is placed in the valve assembly.

The above and other objects of the present invention will become apparent from the drawings, the description given herein and the appended claims.

In one embodiment, the present invention relates to a valve seat or seal assembly for use with a valve having a pivotal valve element which sealingly engages the valve seat. The valve seat comprises a rigid support ring having an annular web from which extend, on each end, annular, radially inwardly projecting flanges to thereby provide a support ring which has a radially inwardly opening channel. Thus, the seat ring is generally U-shaped when viewed in transverse cross section. The seat further includes a polymeric, preferably elastomeric, annular member having a first portion which provides a generally radially inwardly extending seating surface and a second portion, at least part of which is received in and substantially fills the channel of the seat ring. Preferably, the first portion of the polymeric member has a section which is tapered such that, when viewed in transverse cross section, the seating surface has axially spaced, annular sealing areas which have a greater diameter than an intermediate annular sealing area.

In another embodiment, the present invention contemplates a valve assembly utilizing the above-described valve seat, the valve assembly having a valve body, and a valve element pivotally mounted in the valve body to control flow through the valve body. An annularly extending abutment shoulder is formed internally of the valve body in surrounding relationship to the flowway, one axial end of the seat assembly engaging the abutment shoulder and being held thereagainst by a suitable retaining ring received in an annularly extending recess axi-

3      0137639

ally spaced from the abutment shoulder.

## Brief Description of the Drawings

The invention may be more fully understood by reference to the following description of a preferred embodiment in conjunction with the drawings wherein:

Fig. 1 is a vertical view, partly in section and generally through a center line of the valve, of a butterfly valve constructed in accordance with the present invention;

Fig. 2 is an enlarged, fragmentary section of the disk, seat assembly and body of the butterfly valve of Fig. 1, prior to closure;

Fig. 3 is a view similar to Fig. 2 showing another form of the polymeric portion of the seat assembly; and

Fig. 4 is a view similar to Fig. 3 showing still another form of the polymeric portion of the seat assembly.

## Description of the Preferred Embodiment

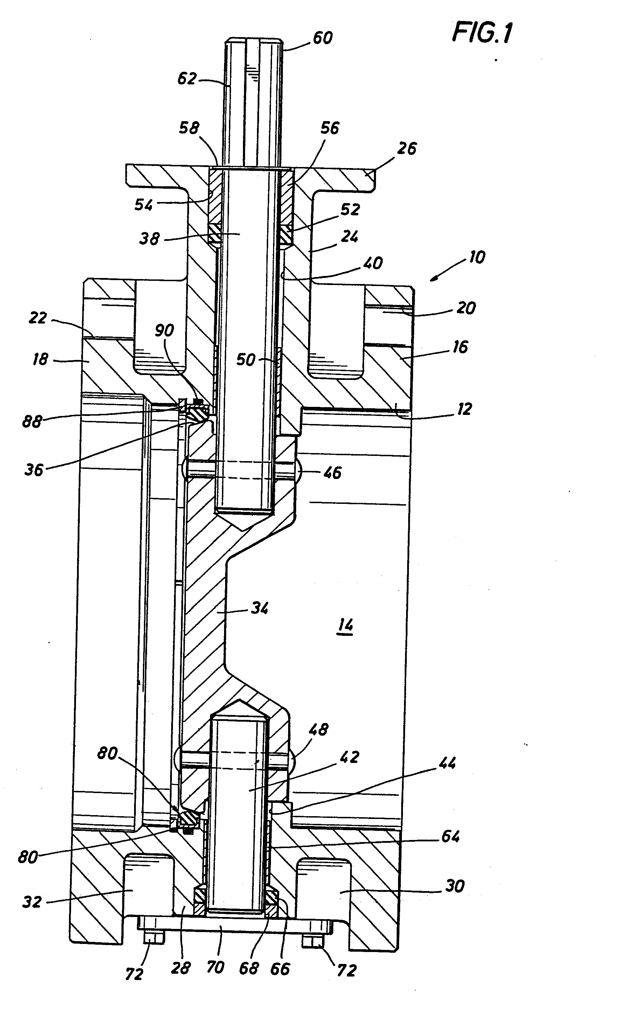

Referring first to Fig. 1, there is shown a butterfly valve 10 having a generally annular body 12 with a fluid flow passage 14 therethrough. The valve body 12 is typically adapted for positioning between opposed, pipe flanges (not shown). To this end, body 12 is provided with circular end flanges 16 and 18 through which extend a series of circumferentially displaced bores 20 and 22, respectively, for receiving bolts so as to secure body 10 between the pipe flanges. Protruding upwardly from valve body 12 is a cylindrical neck portion 24 integrally formed with body 12. A flange 26 is formed on neck 24 and provides a means for securing an actuator (not shown) to valve 10. Diametrically opposite neck 24 is a boss 28 which extends from and is integrally formed with body 12. A series of circumferentially spaced webs 30 and 32 extend between flanges 16 and 18, respectively, and body 12 to provide support for flanges 16 and 18.

Pivotally supported, in a manner hereafter described, in fluid flow passage 14 is a fluid control disk 34 having a peripheral sealing surface 36, disk 34 being of the offset type. Disk 34 is supported in valve body 12 by means of a first, upper stem 38 positioned in a bore 40 of neck 24 and a second, lower stem 42 positioned in a bore 44 of boss 28. Stem 38 is keyed to disk 34 by means of a dowel pin 46 while stem 42 is keyed to disk 34 by means of a dowel pin 48. Stem 38 is rotatably journaled in bore 40 by means of a bearing 50. Sealing around stem 38 is provided by means of packing 52 which is held in a counterbore 54 of neck 24, in a well known manner, by means of a packing gland 56 and a packing ring 58. The upper end 60 of stem 38 protrudes above flange 26 and is provided with wrench flats 62 to provide a means for securing a handwheel, wrench or actuator for rotating disk 34 to open and close the valve 10.

Stem 42 is rotatably journaled in bore 44 by means of bearing 64 received in bore 44. Sealing between lower stem 42 and boss 28 is provided by packing 66 which is held in place by a spacer 68. A cover plate 70 engages the lower end of boss 28 and is secured thereto by means of bolts 72 received in suitable tapped bores (not shown) in webs 30 and 32.

Sealing between disk 34 and body 12 around the periphery of fluid flow passage 14 is provided by means of an annular seat assembly, shown generally as 80, and described more fully below.

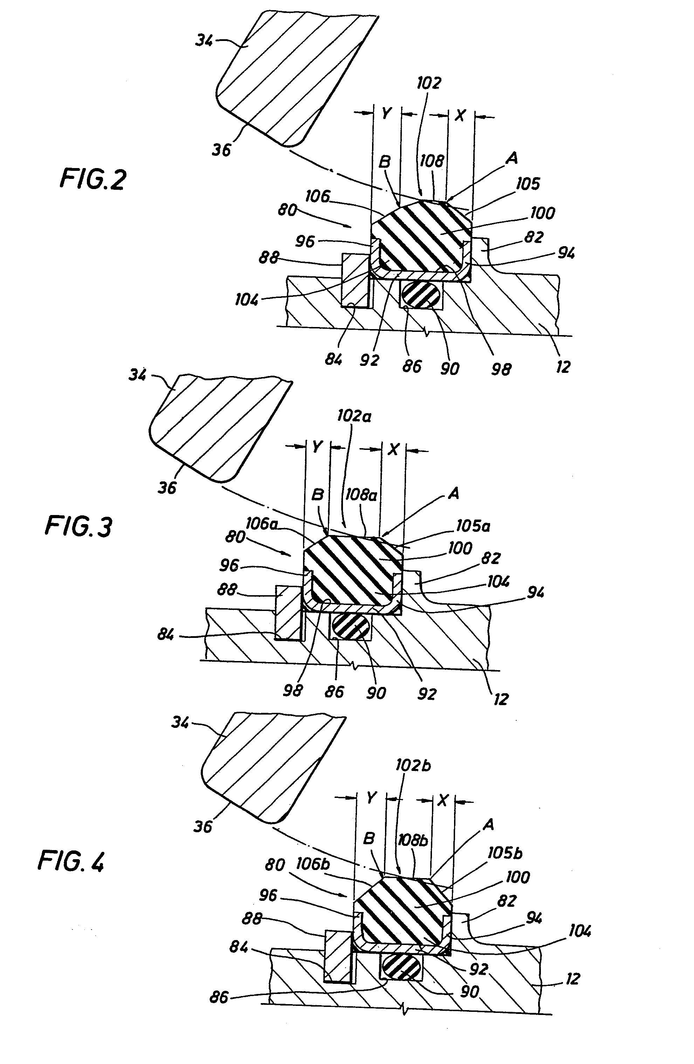

Referring now to Fig. 2, it can be seen that body 12 is provided with an annular shoulder 82 which projects generally radially inwardly and provides an abutment surface, as will be seen hereafter, for seat assembly 80. Body 12 is also provided with a first annular recess 84 axially spaced from abutment shoulder 82 and a second annularly extending recess 86 which is disposed between annular recess 84 and abutment shoulder 82, shoulder 82 and recesses 84 and 86 being in surrounding relationship to flow passage 14.

Received in annular recess or grove 84 is a retainer ring 88 which conveniently takes the form of a snap ring or, alternatively, can be a spring member such as a belleville spring. Retainer ring 88 serves to hold the valve assembly 80 against abutment shoulder 82. Received in second annular recess or groove 86 is an annular seal 90 which serves to form a fluid tight seal between valve assembly 80 and valve body 12.

Seat assembly 80 comprises a rigid support ring comprised of an annular web portion 90 and first and second annular flange portions 94 and 96, respectively, flange portion 94 being attached to a first end of web portion 92 and extending radially inwardly thereof, flange portion 96 being attached to a second end of web 92 and extending radially inwardly thereof. It will thus be seen that the support ring comprised of web 92 and first and second flange portions 94 and 96 form a generally U-shaped, annularly extending channel 98 opening radially inwardly.

Seat assembly 80 also comprises an annular polymeric seat member, which in the preferred case is an elastomeric material such as any of various natural or synthetic rubbers or other synthetic polymeric materials, the polymeric seat member having a first portion 100 which provides a generally radially inwardly extending seating surface 102 and a second portion 104, the second portion being at least partially received in substantially filling channel 98 of the support ring. Generally speaking, first portion 100 can be considered that portion of the polymeric seat ring which extends radially inwardly from the radially innermost ends of the flanges 94 and 96 while second portion 104 can be considered that portion which extends radially outwardly from the radially innermost ends of flanges 94 and 96.

While the seat assembly 80 can be comprised of two separate pieces, i.e. the polymeric seat member and the rigid annular support ring, in the preferred case, they are integrally molded together to form a unitary structure in which the rigid seat ring is bonded to the polymeric seat member. In such cases, the axially outer surfaces of flanges 94 and 96 will substantially determine the axial width of the seat assembly 80, and since the support ring comprised of web 92 and flanges 94 and 96 is substantially incompressible, any axial compression of the polymeric seat member is precluded. Thus, the dimensional integrity of the polymeric seat member is maintained and is subject to change only by the degree of interference between the disk member 34 and the seating surface 102. Thus, when seat assembly 80 is disposed in valve body 12, one axial end, defined by flange portion 94, will be in abutment with shoulder 82 while the other axial end, defined by flange portion 96, will engage retaining ring 88. Thus, the seating assembly 80 is securely locked in valve body 12 and the polymeric, e.g. elastomeric, seat member is not subjected to any axial compression.

The first portion 100 of the polymeric seat portion, as can be seen from Fig. 2, has a section which, when viewed in transverse cross section, defines a first annularly extending seating area 105 and a second annularly extending seating area 106 which are axially displaced from one another and an intermediate annularly extending seating area 108 lying between seating areas 104 and 106. In the embodiment of Fig. 2, the axial dimension "x" of seating area 105 is the same as the axial dimension "y" of the seating area 106. Moreover, the diameter of the seating areas 105 and 106 is greater than the diameter of the seating area 108. It will thus be appreciated that when disk 34 is moved to the closed position such that sealing surface 36 engages seating surface 102, the primary interference line will lie along a circular line at approximately point B on the seating surface 102. Since the diameter of the seating surface 102 taken at point B is greater than the diameter of the seating surface 102 taken at point A, it will be readily recognized that if the seat is now reversed such that the axial positions of flanges 94 and 96 are interchanged, the circular line passing through point A will now provide the primary interference line between the seating surface 102 and the disk 34 meaning that there will be greater interference and hence more pressure sealing capability of the valve. In other words, engagement between the disk 34 and a line of surface contact on the seating surface determined by point A provides greater interference than a line of surface contact determined by point B. Thus, merely by reversing seat assembly 80, the pressure rating of the valve can be changed.

Referring now to Fig. 3, there is shown a second embodiment of the seat assembly 80 wherein the second portion 100 of the polymeric seat member has a seating surface 102a defining a first annularly extending seating area 105a having an axial dimension "x" and a second annularly extending seating area 106a which is axially displaced from seating area 106a and has an axial dimension "y". In the embodiment shown in Fig. 3, the axial dimension "x" is equal to the axial dimension "y". Lying intermediate seating areas 105a and 106a is annularly extending intermediate seating area 108a, surface 108a being generally cylindrical. Thus, portion 100 of the polymeric seat member has a section which, when viewed in transverse cross section, has the shape of a truncated isosceles triangle. Since the diameter of the seating surface 102a defined by a circular line passing through point A is the same as the diameter of the seating surface 102a defined by a circular line passing through at point B, regardless of whether the seating assembly 80 is disposed in valve body 12 such that flange 94 engages abutment shoulder 82, or whether flange 96 engages abutment shoulder 82, the degree of interference between the sealing surface 36 on disk 34 and seating surface 102a will be essentially the same. In other words, the pressure sealing capability will be the same if the seating assembly 80 is reversed. However, it will be appreciated that once the valve has been used for a sufficient period of time such that wearing of the seating surface 102a occurs, reversal of the seat assembly 80 will, in effect, provide a new seating surface on the polymeric seat member such that the seat will have extended life.

With reference now to Fig. 4, there is shown an embodiment of the present invention wherein the seating surface 102b has a first annularly extending seating area 105b having an axial dimension "x", a second annularly extending seating area 106b having an axial dimension "y" and an annularly extending intermediate seating area 108b lying between seating areas 104b and 106b. Since the axial dimension "x" of seating area 104b is less than the axial dimension "y" of seating area 106b, when the disk 34 is moved into the closed position, there will be less interference between the sealing surface 36 and the seating surface 102b than if the seating assembly is reversed such that flange 96 occupies the position of flange 94. Thus, even though the diameter of the line of circular sealing contact determined by point B is the same as the diameter of the line of sealing contact determined by point A, reversal of the seating assembly 80 will change the pressure sealing capabilities of the valve. It will thus be recognized that the embodiment of Fig. 4 represents an alternative to the embodiment of Fig. 2 as a means of obtaining different disk/seat interference.

The advantages of the valve construction of the present invention are numerous. For one, as can be seen, since the seat assembly is reversible, a valve of a single pressure rating can be produced which in effect has twice the lifetime of a valve using a seating assembly with only one sealing area on the polymeric or elastomeric portion of the seat. Thus, for example with reference to Fig. 3, reversal of the seat provides a new seating surface but a valve having the same pressure sealing characteristics. On the other hand, in the embodiments shown in Figs. 2 and 4, reversal of the seat changes the pressure sealing characteristics of the valve without having to obtain an entirely new seat assembly. The unique construction of the seat assembly 80 employing the annular, channel-shaped rigid support ring provides better retention of the elastomeric portion of the seat assembly and aids in preventing line flow

-10-

erosion or extrusion of the polymeric portion of the seat assembly. Moreover, the rigid support ring ensures dimensional integrity of the polymeric portion of the seat assembly by preventing the polymeric portion from being subjected to any axial compression when it is exposed in the valve body. This is to be distinguished from prior art valve assemblies in which the elastomeric portion of the seat assembly is held in place by means of an adjustable seat retaining ring which can exert varying degrees of axial compressive force upon the elastomeric seat portion. This dimensional integrity makes it much easier to produce valve seats with predictable disk/seat interference and hence predictable pressure sealing capabilities. Since the retaining ring 88 can be designed to have press fit capabilities, expensive machining of the valve body or valve seat components is obviated and, moreover, the valve seat assembly 80 can be easily and quickly reversed or, if necessary, replaced completely.

The support ring which is integrally formed or unitary in construction can be made of material or of a rigid plastic material such as suitable thermosetting plastics, e.g. phenolics and the like.

The foregoing represents only one preferred embodiment of the invention, and it will be understood that numerous modifications may suggest themselves to those skilled in the art. Accordingly, it is intended that the scope of the present invention be limited only by the claims which follow.

What Is Claimed Is:

1. A valve seat assembly for use in a fluid control valve having a pivotal valve closure element to open and close said valve comprising:

an annular rigid seat support ring, said seat support ring having a circumferentially extending web portion having first and second axially spaced ends and first and second annularly extending flange portions, said first flange portion extending radially inwardly from said first end of said web portion, said second flange portion extending radially inwardly from said second end of said web portion, to thereby define a generally U-shaped, annularly extending channel opening radially inwardly; and

an annular, polymeric seat member having a first portion providing a generally radially inwardly extending seating surface and a second portion, said second portion being at least partially received in and substantially filling said channel of said seat support ring.

2. The valve seat assembly of Claim 1 wherein said first portion of said seat member has a section which, when viewed in transverse cross section, defines a first, annularly extending seating area, an axially spaced second, annularly extending seating area and an intermediate, annularly extending seating area, said first and second annularly extending seating areas having a greater diameter than said intermediate annularly extending seating area.

3. The valve seat assembly of Claim 2 wherein said section has the shape of a truncated triangle.

4. The valve seat assembly of Claim 3 wherein said shape is that of a truncated isosceles triangle.

5. The valve seat assembly of Claim 1 wherein said support ring is molded integrally with said seat member.

6. The valve seat assembly of Claim 1 wherein said polymeric seat member comprises an elastomeric material.

7. The valve seat assembly of Claim 1 wherein said rigid seat support ring comprises a metallic material.

8. A valve assembly comprising:

a valve body having a flow passage therethrough;

a valve closure element pivotable within said body between open and closed positions to control the flow of fluid through said flow passage, said valve closure element having a sealing surface;

a valve seat assembly disposed in said valve body and comprising:

an annular rigid seat support ring, said seat support ring having a circumferentially extending web portion having first and second axially spaced ends and first and second annularly extending flange portions, said first flange portion extending radially inwardly from said first end of said web portion, said second flange portion extending radially inwardly from said second end of said web portion, to thereby define a generally U-shaped, annularly extending channel opening radially inwardly; and

an annular, polymeric seat member having a first portion providing a generally radially inwardly extending seating surface for sealingly engaging said sealing surface of said valve element when said valve is in the closed position, and a second portion, said second portion being at least partially received in and substantially filling said channel of said seat support ring.

3-

9. The valve assembly of Claim 8 wherein said valve seat assembly is as defined in any one of Claims 2-6.

10. The valve assembly of Claim 8 wherein said valve body includes an annularly extending shoulder in surrounding relationship to said flow passage, one side of said seat assembly engaging said shoulder and there are means for holding said seat assembly against said shoulder.

11. The valve assembly of Claim 10 wherein said valve body has a first annularly extending recess axially spaced from said shoulder, said seat assembly being disposed between said first recess and said shoulder and there are retainer ring means disposed in said recess and in engagement with said seat assembly.

12. The valve assembly of Claim 11 wherein there is a second annularly extending recess between said annularly extending shoulder and said first annularly extending recess, said web portion of said valve seat assembly overlying said second annularly extending recess, there being annular seal means disposed in said second annular recess for sealing between said valve body and seat assembly.

FIG.1

0137639

1/2

FIG.2

FIG.3

FIG.4

## DOCUMENTS CONSIDERED TO BE RELEVANT

EP 84305507.0

| Category | Citation of document with indication where appropriate, of relevant passages | Relevant to claim | CLASSIFICATION OF THE APPLICATION (Int. Cl.4) |
|---|---|---|---|
| A | US - A - 4 113 268 (K.C. SIMMONS) <br> * Fig. 2,3,7 * | 1-8 | F 16 K 1/226 <br><br> F 16 K 25/00 |
| A | US - A - 4 162 782 (R.D. WILKINS) <br> * Fig. 4,5 * | 1,5-8 | |
| P,A | US - A - 4 418 889 (B. KRAUSE) <br> * Totality * | 1,5-8 | |
| A | US - A - 4 293 116 (J.M.H. NRICHS) <br> * Fig. 2,8 * | 1,6-8 | |
| A | US - A - 4 341 233 (W.W. BROADWAY) <br> * Totality * | 1,5-8 | **TECHNICAL FIELDS SEARCHED (Int. Cl.4)** |
| A | US - A - 4 281 818 (J.P. CUNNING- HAM) <br> * Fig. 1-3 * | 1,8,10-12 | F 16 K 1/00 <br><br> F 16 K 25/00 <br><br> F 16 J 15/00 |

The present search report has been drawn up for all claims

| Place of search | Date of completion of the search | Examiner |
|---|---|---|
| VIENNA | 04-12-1984 | ROUSSARIAN |